# NEUE EUROPÄISCHE PATENTSCHRIFT

(11) **EP 0 200 883 B2**
(45) Veröffentlichungstag und Bekanntmachung des Hinweises auf die Entscheidung über den Einspruch: **21.08.1996**
(45) Hinweis auf die Patenterteilung: 29.01.1992
(21) Anmeldenummer: 86103231.6
(22) Anmeldetag: 11.03.1986
(51) Int. Cl.: H04Q 1/14, H01R 4/24, H01R 43/01

(54) **Kabelabschlusseinheit**
Cable termination unit
Unité de terminaison de câble

(30) Priorität: 16.03.1985 DE 3509523
(43) Veröffentlichungstag der Anmeldung: 17.12.1986
(60) Teilanmeldung: 89111048.8
(73) Patentinhaber: Quante Aktiengesellschaft, 42109 Wuppertal (DE)
(72) Erfinder: Butzke, Karl-Friedrich, D-5600 Wuppertal 1 (DE); Neumann, Peter, D-5600 Wuppertal 1 (DE); Hell, Erich, D-5608 Radevormwald (DE); Rott, Joachim, D-1000 Berlin 37 (DE)
(74) Vertreter: Ludewig, Karlheinrich, Dipl.-Ing.

(56) Entgegenhaltungen:
- EP-A- 0 073 740
- WO-A-80/02775
- CH-B- 493 948
- DE-A- 1 933 133
- DE-A- 2 040 805
- DE-A- 2 720 220
- DE-A- 2 814 018
- DE-A- 3 020 516
- DE-A- 3 136 662
- DE-A- 3 311 476
- DE-C- 2 201 504
- DE-C- 2 804 478
- DE-C- 2 811 812
- DE-C- 3 306 263
- DE-C- 3 311 459
- US-A- 3 239 796
- US-A- 3 760 328

## Beschreibung

Die Erfindung betrifft eine Kabelabschlußeinheit für Fernmelde-, Signal-, Steuerkabel od. dgl. der im Oberbegriff des Patentanspruches 1 genannten Art.

Derartige Abschlußeinheiten (vergl. DE-A- 31 36 662) haben sich bewährt. Hinsichtlich der Montage sowie der Haltbarkeit der Anschlüsse sollen sie weiter vereinfacht und verbessert werden.

Aufgabe der Erfindung ist es daher. eine Kabelabschlußeinheit der eingangs genannten Art so zu gestalten, daß die einzelnen Anschlüsse leicht und sicher durchzuführen sind und übersichtlich angeordnet sind. Darüber hinaus soll die Kabelabschlußeinheit wohlfeil herzustellen sowie vielseitig verwendbar sein. Dies wird erfindungsgemäß durch die im Kennzeichen des Patentanspruches 1 angeführten Maßnahmen erreicht.

Diese Anordnung erlaubt eine einfache Montage, da die Anschlußkontakte für die abgehenden Leitungen frei liegen, und nicht durch Überspannungsableiter verdeckt sind. Darüber hinaus erlaubt eine solche Anordnung die Möglichkeit auch bei eingesteckten Überspannungsableitern Änderungen bei Rangierleitungen vorzunehmen. Günstigerweise ist die Kontaktreihe für die abgehenden Drähte frei von dem Magazin der Überspannungsleiter, um so sicher die Verdrahtung der bereits installierten Kabelabschlußeinheit mit den abgehenden Leitungen vornehmen zu können, wobei zugleich bereits gewährleistet ist, daß ein Überspannungsschutz eingebaut ist. Schließlich bietet eine solche Ausgestaltung eine leichte Herstellung, da durch die Anordnung der Kontakte für die Überspannungsableiter zwischen den Kontakten der ankommenden Leitungen und den Rangierleitungen eine einfache Ausbildung der Kontakte gewährleistet ist. Darüber hinaus kann der Anschlußblock bei einer solchen Anordnung einfach gestaltet sein. Durch die stufenweise Anordnung der beiden äußeren Kontaktreihen ist außerdem gewährleistet. daß genügend Platz für die Überspannungsableiter gegeben ist, ohne daß der Raum für den Anschlußblock mit Überspannungsableiter wesentlich vergrößert wird.

Empfehlenwerterweise ist zwischen den unterschiedlich hoch gestalteten Kontaktreihen eine Vertiefung vorgesehen, die die Kontaktreihen für die Überspannungsableiter aufnimmt. Diese Anordnung gestattet eine leichte Montage, da beim Einsetzen der Überspannungsableiter diese in dem Anschlußblock zugleich geführt sind. Darüberhinaus ist auch eine einfache Kontaktierungsmöglichkeit mit den zwischen den Kontakten der ankommenden Leitungen sowie den Rangierleitungen liegenden Anschlüssen gegeben. Empfehlenswerterweise sind die Überspannungsableiter in einem Magazin angeordnet, das mit Steckkontakten in den Anschlußblock eingreift, um so sicher und einfach die Bestückung der Kabelabschlußeinheit bzw. des Anschlußblokkes vornehmen zu können.

Um die Montage weiter zu vereinfachen, ist zwischen den beiden Kontaktreihen für die ankommenden Leiter und den abgehenden Leitungen neben der Kontaktreihe für die Überspannungsbaleiter eine weitere Kontaktreihe für Prüf-oder Trennstekker vorgesehen. Eine solche Anordnung gestattet eine Überprüfung des Leitungszuges ohne daß dabei die abgehenden Leitungen verdeckt sind, so daß weitere Anschlüsse an den abgehenden Leitungen erfolgen können und mit einer solchen Kabelabschlußeinheit sicher zu arbeiten ist.

Von Vorteil ist es auch, wenn die Kontaktreihe für die Prüf- oder Trennstecker frei von dem Magazin der Überspannungsableiter ist, um so notwendige Rangierarbeiten bei Überspannungsschutz durchführen zu können und nicht extra die Überspannungsableiter ausbauen zu müssen.

Bei einem besonderen Ausführungsbeispiel der Erfindung sind die einzelnen Anschlußkontakte der Kontaktreihe für die abgehenden Leitungen jeweils als Doppelkontakte ausgebildet, um so an einem Anschlußkontakt mehrere Leitungen anschließen zu können. Hierdurch wird die Montage an der Kabelabschlußeinheit bzw. die Verdrahtung des Anschlußblockes wesentlich erleichtert. Günstig ist es hierbei, wenn bei Ausbildung der einzelnen Anschlußkontakte für die abgehenden Leitungen als Doppelkontakte die Anschlußkontakte für die ankommende Kabelader als Einfachkontakte aufgebaut sind. Eine solche Anordnung erlaubt eine kostensparende Ausbildung der in dem Anschlußblock befindlichen Kontakte, so daß sich insgesamt eine wohlfeile Herstellung der Kabelabschlußeinheit ergibt. Dabei wird der Bedienungskomfort durch die zwei Anschlüsse bei den abgehenden Leitungen beibehalten.

Um die Montage und Installation der Kabeladern weiter zu vereinfachen, empfiehlt es sich, den Anschlußkontakten für die ankommenden Kabeladern und/oder für die abgehenden Leitungen Schneidmesser nachzuordnen, so daß durch einfaches Eindrücken der Kabeladern die Kabelabgeschnitten werden und keine störenden Überlängen vorhanden sind. Weiter ist hierdurch gewährleistet, daß durch die einzelnen Schneidmesser ein sicheres Trennen der Kabeladern gegeben ist, da die Beanspruchung der Schneidmesser nicht oft erfolgt und diese somit während der Lebensdauer ihre Schneidschärfe beibehalten.

Um die Größe der Anschlußblöcke weiter zu verkleinern, trotzdem aber den erforderlichen Sicherheitsabstand zwischen den Kontakten bzw. genügend Raum für die Kontaktaufnahmen zu haben, sind die benachbarten Kontakte wenigstens einer Kontaktreihe jeweils versetzt zueinander angeordnet. Hierbei bleibt die günstige Montage für die einzelnen Anschlüsse der Kontakte erhalten.

Bei einem besonderen Ausführungsbeispiel der Erfindung ist die Aufnahme für die abisolierfreien Abschlüsse für die ankommenden Kabeladern bzw. für die abgehenden Leitungen und/oder das Beschaltungswerkzeug zur Herstellung einer Verbindung mit Anschlußkontakten derart ausgebildet, daß das Beschaltungswerkzeug in zwei um 180° Grad auseinanderliegenden Drehstellungen zum Anschließen der Adern und/oder Leitungen funktionsfähig ist. Eine solche Ausbildung der Aufnahme und/oder des Beschaltungswerkzeuges erlaubt ein günstiges und zeitsparendes Anschließen der einzelnen Adern an den abisolierfreien Anschlüssen.

Bei einem besonderen Ausführungsbeispiel der Erfindung sind die beiden einen Kontaktierungsschlitz zwischen sich aufweisenden Kontaktschenkel der einzelnen abisolierfreien Anschlüsse dachförmig gestaltet, hierbei ist die den Kontaktierungsschlitz aufweisende Dachspitze in Längsrichtung der anzuschließenden Adern und/oder Leitungen ausgerichtet. Eine solche Anordnung erlaubt eine sichere Montage, da, sobald die anzuschließenden Adern oder Leitungen in dem Kontaktierungsschlitz ist, sie mit dem Anschlußkontakt in elektrisch leitfähiger Verbindung steht. Denn durch die Schrägstellung der Kontaktschenkel in Dachform entsteht beim Anschließen der Ader bzw. der Leitung eine kombinierte Hub- und Torsionsbewegung der Kontaktschenkel und damit ein federnder Kontakt. Die Isolation der Ader wird beim Eindrücken in den Kontaktierungsschlitz durch die Kanten der Kontaktbacken durchtrennt und der metallische Leiter leicht eingekerbt. Hierbei empfiehlt es sich, bei dem anschließenden Leiter - auf Kupferbasis - die Dachspitze auf die Adern hinweisen zu lassen. Während bei anderen Leitern auch eine genau um 180° gedrehte Stellung der Dachspitze vorgenommen werden kann. Die Dachspitze weist dann von den Adern weg. Bei dieser Anordnung wird bei einem Zug an der Ader die Verbindung zwischen Anschlußkontakt und Ader noch fester gestaltet. Durch die dachförmige Gestaltung sowie die Ausrichtung des Daches erfolgt nämlich bei einem Zug auf die Ader ein tieferes Eingraben der Begrenzungskanten des Kontaktierungsschlitzes in dem metallischen Leiter der Adern. Günstig ist es, wenn bei Ausbildung des abisolierfreien Anschlusses als Doppelkontakt der mittlere Kontaktschenkel selber dachförmig gestaltet ist, hierbei ist die Dachspitze des mittleren Schenkels in Längsrichtung der anzuschließenden Leitung oder Ader ausgerichtet. Durch einen solchen mittleren dachförmigen Kontaktschenkel ergibt sich eine sichere Montage und Halterung der Leitung im Anschlußkontakt. Darüberhinaus wird bei Belegen nur eines Anschlusses des Doppelkontaktes der andere in seiner Funktionsfähigkeit nicht behindert. Vorteilhafterweise weist der mittlere Kontaktschenkel eine Ausbuchtung auf zur Führung in Konturen des Anschlußblockes. Auf diese Weise läßt sich der Anschlußkontakt leicht montieren, da durch die Führung der Anschlußkontakt sicher an die richtige Stelle gebracht werden kann.

Bei einem besonderen Ausführungsbeispiel der Erfindung ist der eine der Kontaktschenkel der Kontakte für die Prüf- oder Trennstecker durch Schlitzung in zwei Kontaktzungen unterteilt. Durch diese Unterteilung ergibt sich bei einfacher Ausgestaltung eine überaus sichere Kontaktgabe, so daß immer sichergestellt ist, daß dieser Kontaktschenkel mit zwei Stellen den Gegenkontakt berührt.

Bei einem besonderen Ausführungsbeispiel sind die im Anschlußblock vorgesehenen Kammern zur Aufnahme der einzelnen Kontakte soweit geschlossen, daß sie mit Fett ausgießbar sind. Hierdurch wird vermieden, daß an den einzelnen Kontakten unter ungünstigen klimatischen Verhältnissen Kriechströme entstehen können, die möglicherweise die Funktion der Kabelabschlußeinheit behindern können.

Bei einem besonderen Ausführungsbeispiel der Erfindung ist im mittleren Bereich des Überspannungsableitmagazins eine U-förmige Erdungsschiene einsetzbar, deren Schenkelabstand zur Aufnahme unterschiedlicher Ableiter veränderlich ist. Durch die mittlere Anordnung der Erdungsschiene kann nunmehr das Magazin von beiden Seiten mit Überspannungsableitern bestückt werden, so daß solche Überspannungsableitermagazine besonders klein gestaltet werden können und bei der Montage der Kabelabschlußeinheit die Verdrahtung mit den Rangierleitungen nicht stören können. Durch die veränderbare Breite der Erdungsschiene können bei dem Magazin auch unterschiedlich große Ableiter verwendet werden. Vorteilhaft ist es hierbei, wenn die Überspannungsleiter im Magazin federnd gegen die Erdungsschiene gehalten sind. Hierbei kontaktiert eine die Erwärmung des Ableiters bei Überspannung begrenzende Schmelzpille den Ableiter. Hierdurch ist sichergestellt, daß bei auftretenden Überspannungen der Ableiter nicht zerstört wird, da bei Überspannung lediglich die Schmelzpille zerstört wird und nicht der gesamte Ableiter. Hierdurch ergibt sich eine kostengünstige Montage. Vorteilhafterweise berührt der den Ableiter gegen die Erdungsschiene drückende Federkontaktschenkel nach Abschmelzen der Schmelzpille die Erdungsschiene, da hierduch eine gefahrlose Ableitung der Überspannung auftritt, ohne daß der Ableiter beschädigt wird.

Bei einem besonderen Ausführungsbeispiel der Erfindung greift das im Anschlußblock angeordnete Überspannungsableitermagazin mit federnden an der Erdungsschiene vorgesehenen Zungen in Schlitze der Wandungen des wannenförmigen Trägers ein, hierdurch ist eine sichere Ableitung der Überspannung gewährleistet. Weiter ist durch eine derartige Gestaltung eine einfache Montage gegeben, da durch da durch bloßes Einführen des Magazins die Anschlüsse des Ableiters geerdet sind.

Zur weiteren Vereinfachung der Halterung der Anschlußblöcke sind in Querschlitze mündende Längsschlitze an Wandungen des wannenförmigen Trägers vorgesehen, in die die Anschlußblöcke geführt sind. Durch einfaches Einstekken in die Schlitze wird nunmehr eine sichere Halterung hergestellt, so daß derartige Anschlußblöcke lediglich in den wannenförmigen Träger gesteckt werden müssen. Günstigerweise erfolgt hierbei die Befestigung des Anschlußblockes in dem wannenförmigen Träger durch eine Rastverbindung, was weiter die Halterung des Anschlußblockes und somit die Montage erleichtert.

Bei einem anderen Ausführungsbeispiel der Erfindung ist in die einzelnen Kontakte einer Kontaktreihe jeweils ein Kombinationsstecker mit Stromsicherungen einsetzbar. Hierdurch ergibt sich eine weitere Anwendungsmöglichkeit der Kabelabschlußeinheit. Um dieser zusätzlichen Aufgabe gerecht zu werden, empfiehlt es sich, zur Einschaltung der Stromsicherung den Kontakt zwischen Kabel und Magazinanschluß zu unterbrechen.

Vorteilhafterweise sind die Kontakte für die Stomsicherungen über eine Öffnung im Unterteil des Anschlußblockes trennbar. Hierdurch ist in einfacher Weise ein gefahrloses Auswechseln der Stromsicherung sichergestellt, da die Kontakte durch ein über die untere Öffnung einfahrbares Isolationssperrglied getrennt gehalten werden können, während von oben die neue Stromsicherung zwischen die Kontakte eingeführt werden kann. Es ist also immer gewährleistet, daß kein schädlicher Überstrom zu den Rangierleitungen gelangen kann.

Bei einem weiteren Ausführungsbeispiel der Erfindung sind an den Seitenstirnflächen der Anschlußblöcke für die Drahfführung dienende Ösen vorgesehen, die durch Zwischenstege in mehrere Aufnahmen unterteilt sind. Hierdurch ergibt sich der bedeutende montagetechnische Vorteil, da die immer paarig anzulegenden Rangierdrähte - eine Doppelader - vorsortiert in der richtigen Reihenfolge in die Aufnahmen eingelegt werden können, um sie dann anschließend mit dem Beschaltwerkzeug fortlaufend anschalten zu können. Hierdurch wird nicht nur Montagezeit eingespart, sondern auch Beschaltfehler erheblich reduziert, da die Leitungen einem Platzschema zugeordnet bleiben, auch wenn sie zum Beispiel bei Umschaltarbeiten von den Kontakten zeitweise gelöst werden.

Besonders vorteilhaft ist es, wenn Kontakte der im Magazin angeordneten Überspannungsableiter mit einer Abbiegung der Anschlußkontakte beim Einsetzen des Magazins in den Anschlußblock in Verbindung treten, hierbei weist das freie Ende der Abbiegung gegen das Magazin, während die Abbiegungen selber an einem Fußteil der Anschlußkontakte angeformt sind. Hierdurch wird zum einen eine gute Kontaktgabe zwischen der Abbiegung und dem Kontakt der Überspannungsleiter gewährleistet, zum anderen ist sichergestellt, daß die beim Einsetzen der Überspannungsableiter auftretenden Steckkräfte der Kontakte des Magazines durch die am Fußbereich angeformten Abbiegungen leicht aufgegangen werden können, ohne daß eine bleibende Verformung der Abbiegung eintritt.

Günstigerweise stützen sich die den Anschlußkontakten nachgeordneten Schneidmesser unmittelbar auf Schenkel der Anschlußkontakte ab. Diese Maßnahme erlaubt eine sichere Anordnung und Halterung des Schneidmessers, denn der hohe spezifische Druck während des gegebenenfalls mehrmaligen Beschaltens und Abschneiden der Adern wird von einer metallischen Auflage, nämlich einem Anschlußkontaktschenkel aufgenommen. Eine Lageveränderung des Schneidmessers in vertikaler Richtung ist selbst beim Schneiden ausgeschlossen. Empfehlenswerterweise ist es, wenn die Schneidemesser an ihrer oberen Stirnseite mit einer eine Schneidekante bildenden Abschrägung versehen sind, während die untere Stirnseite eine Abkröpfung aufweist, die zur Kennzeichnung der Lage der Schneidekante dient. Durch die Abschrägung des Schneidmessers wird der Schneidedruck reduziert. Die Abkröpfung am Schneidemesser gestattet bei der Montage, selbst optisch genau kontrollierbar, eine genaue Ausrichtung der Schneidkante, so daß die Schneidkante bezüglich der Anschlußkontakte genau angeordnet werden kann. Darüberhinaus ist eine Halterung der Schneidmesser über die Abbiegungen am Anschlußkontakt möglich. Vorteilhafterweise greifen die Schneidmesser an ihren beiden Längsseiten in Führungsnuten des Anschlußblockes ein. Durch Verbreiterung der Schneidmesser und Ausbildung von Führungsnuten in den Aufnahmekonturen des Anschlußblockes ist eine stabile Führung und sichere Halterung der Schneidmesser erreicht.

Bei einem besonderen Ausführungsbeispiel der Erfindung sind im Bereich ihrer Aussenkanten die Kontaktschenkel der Anschlußkontakte beidseitig des Schlitzes und/oder der Kontaktzunge mit Anprägungen versehen. Hierdurch wird zum einen die Herstellung erleichtert und zum anderen die Haltekraft für die angeschlossenen Adern oder Leitungen vergrößert. Denn durch die Anprägungen verlängern sich die Aussenkanten der Kontaktschenkel der Anschlußkontakte, so daß die beiden Kontaktschenkel sich leicht zueinander neigen. Hierdurch wird nicht nur die Möglichkeit gegegeben, den Kontakfführungsschlitz breiter - mit einem stabileren Stanzmesser - zu stanzen und durch die Prägung auf die gewünschte schmale Schlitzbreite zu bringen, sondern auch diesen auf Untermaß zu verformen, um eine zusätzliche Vorspannung gegenüber dem anzuschließenden Draht zu erhalten.

Vorteilhafterweise sind die kanalartigen Vertiefungen für die Anschlußkontakte mit Einführungsanschrägungen versehen. Durch die Anschrägungen können die Kabeladern leicht in die kanalartigen Vertiefungen eingelegt werden. Darüberhinaus bietet die Anschrägungen die Möglichkeit das Beschaltwerkzeug vereinfacht einzuführen, so daß eine montagetechnische Verbesserung erzielt wird. Empfehlenswert ist es hierbei, wenn das zum Anschließen der Adern und/oder Leitungen an die Anschlußkontakte dienende Beschaltungswerkzeug drei nebeneinanderliegende plattenartige Abschnitte aufweist, wobei der mittlere Abschnitt gegenüber den beiden äußeren Abschnitten hervorsteht und gegen die Kraft einer Feder zurückdrückbar ist. Durch den hervorstehenden Abschnitt in Verbindung mit den Anschrägungen ist ein deutlich verbessertes Aufsetzen des Beschaltungswerkzeuges möglich. Der federnde Mittelabschnitt ist während des Kontaktier- und Abschneidvorganges für die anzuschließende Ader in Griff des Beschaltungswerkzeuges aufgenommen.

Besonders günstig ist es, wenn der Anschlußblock im Bereich der Ösen eine Bohrung trägt, in die eine mit einem Längsschlitz versehene Metallhülse einsetzbar ist, die einerseits mit dem metallischen Träger in Verbindung tritt und andererseits zur Halterung eines Meßsteckers, wie Bananenstekker, dient. Durch diese Metallhülse ist ein einfacher Steckanschluß gegeben, mit dem zu Meß- oder Prüfzwecken das Potential, z.B. Erdpotential des Trägers vom Anschlußblock, gemessen werden kann. Hierbei erlaubt der sich über die ganze Länge der Metallhülse erstreckende Schlitz eine Vorspannung in der Metallhülse zu erzeugen, die eine sichere Halterung und Kontaktierung des Meßstekkers gewährleistet, zugleich kann bereichsweise in dem Schlitz eine Rippe in der Bohrung eingreifen, die einen lagerichtigen Einsatz der Metallhülse zum Träger gestaltet. Dies empfiehlt sich insbesondere dann, wenn die Metallhülse in einem Endbereich einen weiteren Schlitz trägt, hierbei weisen in diesem Endbereich beide Schlitze eine Verbreiterung sowie die Schlitze verkleinernde Vorsprünge auf. Durch den Doppelschlitz ist an einem Ende der Hülse in Verbindung mit den Vorsprüngen im Schlitz eine sichere Kontaktierung mit dem den Anschlußblock halternden Träger gegeben.

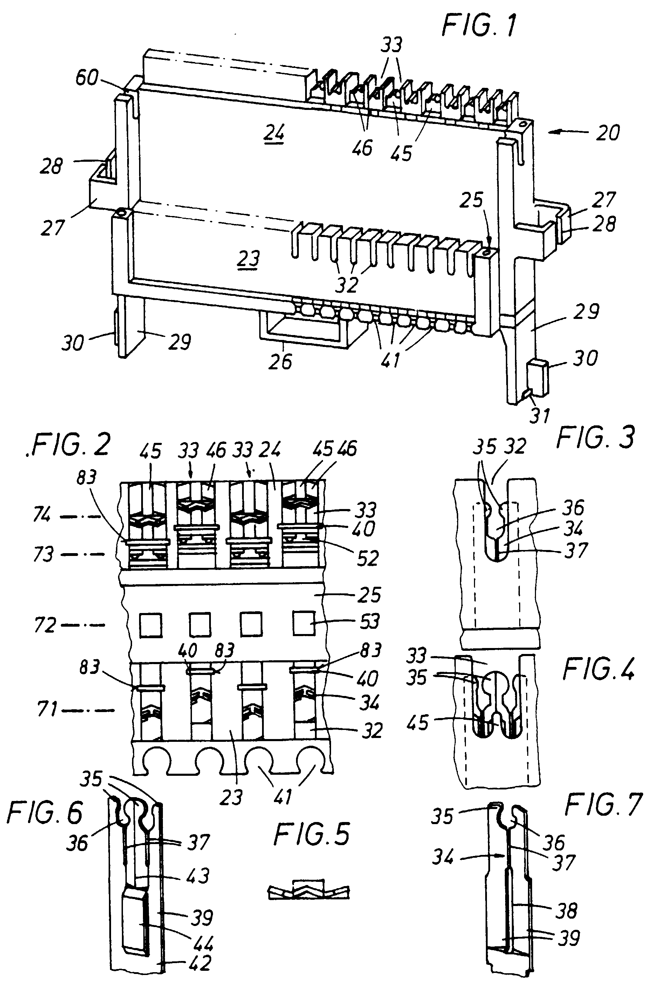

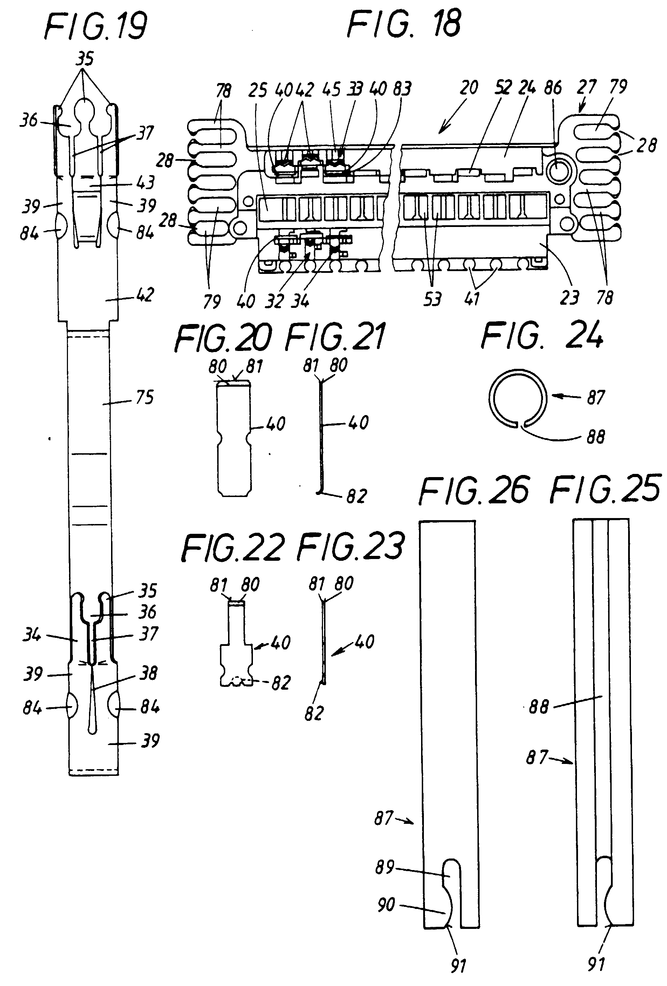

In den Zeichnungen ist der Erfindungsgegenstand in mehreren Ausführungsbeispielen dargestellt und zwar zeigen:
Fig. 1
   in perspektivischer Darstellung einen Anschlußblock,
Fig. 2
   einen Ausschnitt aus der Draufsicht auf den Anschlußblock in größerem Maßstab,
Fig. 3
   eine Seitenansicht eines Einfachanschlusses des Anschlußblockes,
Fig. 4
   eine weitere Ansicht eines Doppelanschlußkontaktes des Anschlußblockes,
Fig. 5
   eine Draufsicht auf den Anschlußkontakt nach Fig. 4,
Fig. 6
   eine perspektivische Ansicht eines Doppelkontaktes,
Fig. 7
   eine perspektivische Ansicht eines einfachen Kontaktes,
Fig. 8
   einen Querschnitt durch den Anschlußblock in größerem Maßstabe bei einem ersten Ausführungsbeispiel,
Fig. 9
   einen Querschnitt im größeren Maßstabe durch den Anschlußblock bei einem zweiten Ausführungsbeispiel,
Fig. 10
   einen wannenartigen Träger mit mehreren eingesetzten Anschlußblöcken,
Fig. 11 bis Fig. 14
   verschiedene Ausführungsbeispiele des Überspannungsableiters ohne und mit Lötpille im Querschnitt,
Fig. 15
   einen Doppelkontakt mit zwei Kontaktzungen,
Fig. 16
   einen Querschnitt durch ein weiteres Ausführungsbeispiel eines wannenförmigen Trägers,
Fig. 17
   in perspektivischer Darstellung ein Beschaltungswerkzeug zum Anschließen der Kabeladern,
Fig. 18
   ein weiteres Ausführungsbeispiel eines Anschlußblockes in Draufsicht,
Fig. 19
   ein weiteres Ausführungsbeispiel eines Anschlußkontaktes in Vorderansicht,
Fig. 20
   ein weiteres Ausführungsbeispiel des Schneidmessers in Vorderansicht,
Fig. 21
   das Schneidmesser nach Fig. 20 in Seitenansicht,
Fig. 22
   ein weiteres Ausführungsbeispiel des Schneidmessers in Vorderansicht,
Fig. 23
   das Schneidmesser nach Fig. 22 in Seitenansicht,
Fig. 24
   eine Metallhülse für einen Meßstecker in Draufsicht,
Fig. 25
   die Metallhülse nach Fig. 24 in Vorderansicht und
Fig. 26
   die Metallahülse in Rückansicht.

Die in Fig. 1 dargestellte Anschlußblock 20 weist ein zweiteiliges Gehäuse auf, mit einem Oberteil 21 und einem Unterteil 22.

Wie aus Fig. 1 insbesondere aber aus Fig. 8 und 9 hervorgeht, weist der Anschlußblock Stufen 23 und 24 auf, die unterschiedlich hoch gestaltet sind. Hierbei trägt die niedrige Stufe an der Seite der höheren Stufe eine Vertiefung 25.

Unter dem Unterteil 22 des Anschlußblockes 20 ist eine Öse 26 vorgesehen. Diese Öse dient zur Aufnahme und Führung von Kabeladern.

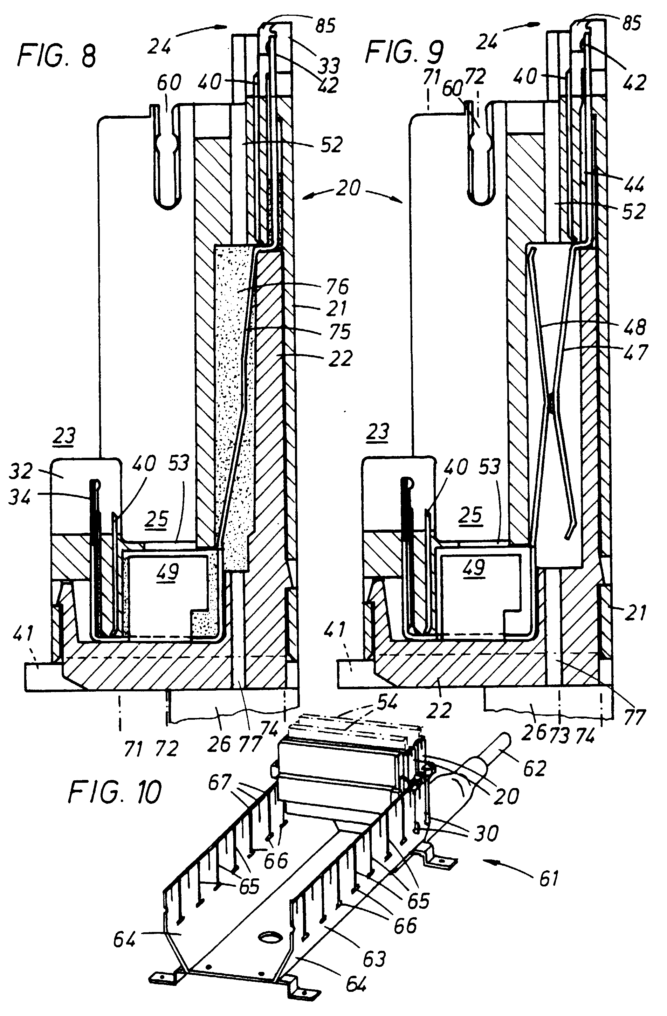

An den beiden Seitenstirnseiten des Anschlußblockes 20 sind ebenfalls Ösen 27 vorgesehen, die jedoch einen Schlitz 28 aufweisen zum Einführen von Rangierleitungen in die Ösen. Die Ösen 26 dienen zur Heranführung von Kabeladern an den Anschlußblock 20, während die Ösen 27 die abgehenden Rangierleitungen aufnehmen und Haltern. Bei dem Ausführungsbeispiel nach Fig. 18 sind die Ösen 27 durch Zwischenstege 78 unterteilt, so daß mehrere Aufnahmen 79 in der Öse 27 entstehen. In diese Aufnahmen können die an die Anschlußkontakte anzuschließenden Kabeladern vorsortiert werden und zwar in der richtigen Reihenfolge, um anschließend mit dem Beschaltwerkzeug fortlaufend anschalten zu können. Hierdurch wird erheblich an Montagezeit eingespart. Außerdem werden Beschaltfehler nahezu verhindert. Wie weiter aus Fig. 1 noch zu erkennen ist, ist an den Seitenstirnflächen im unteren Bereich des Anschlußblockes 20 eine Verlängerung 29 vorgesehen. Diese Verlängerung weist einen vom Anschlußblock weggerichteten Vorsprung 30 auf, wobei beidseitig am Fuße des Vorsprunges Rastnasen 31 vorgesehen sind. Vorsprung 30 und Rastnasen 31 dienen zur Führung und Halterung des Anschlußblockes an einem Träger 63 (vergl. Fig. 10).

In den oberen Enden der Stufen 23, 24 sind kanalartige Vertiefungen 32, 33 eingelassen. Diese kanalartigen Vertiefungen dienen zur Aufnahme von Kabeladern sowie zur Halterung von Anschlußkontakten.

Die kanalartigen Vertiefungen 32 der Stufe 23 weisen einen Anschlußkontakt 34 auf, der als Einfach kontakt ausgebildet ist. An diesen Kontakt kann eine Kabelader angeschlossen werden. Der Kontakt (vergl. Fig. 7) weist an seinem oberen Ende zwei zugewandte Nasen 35 auf, deren Abstand geringer ist, als der Außendurchmesser der anzuschließenden Kabeladern. Durch die Nasen 35 entsteht am oberen Ende des Anschlußkontaktes eine etwa kreisförmige Ausnehmung 36, die an ihren unteren Enden in einem Kontaktierungsschlitz 37 sich fortsetzt. Dieser Kontaktierungsschlitz ist in seiner Breite etwas geringer, als der Leiter der Kabelader. Beim Eindrücken der Kabelader in diesen Schlitz 37 wird die Aderisolierung durchtrennt und der Leiter leicht verformt, so daß ein guter elektrisch leitender Kontakt zwischen Anschlußkontakt 34 und dem Leiter der Kabelader eintritt.

An seinem unteren Ende, das nicht mehr zur Halterung der Kabelader verwendet wird, schließt sich an dem Kontaktierungsschlitze ein erweiterter Schlitz an. Dieser Schlitz dient der vereinfachten Fertigung des Anschlußkontaktes, da so die notwendigen Stanzwerkzeuge eine ausreichende Dikke aufweisen können.

Wie aus Fig. 7 zu erkennen ist, teilen die Schlitze 37, 38 den Anschlußkontakt in zwei Kontaktschenkel 39. Diese Kontaktschenkel sind derart winkelförmig abgewinkelt, daß der Anschlußkontakt 34 im Querschnitt gesehen dachförmig gestaltet ist, wobei der Kontaktierungsschlitz 37 sozusagen als Dachmitte ausgebildet ist.
Der Anschlußkontakt 34 setzt sich, wie später noch aufgezeigt wird, im Anschlußblock 20 weiter fort.

Die kanalartige Vertiefung 32 weist hinter dem Anschlußkontakt 34 ein Schneidmesser 40 auf. Dieses Schneidemesser dient beim Anschließen zum Abschneiden von Aderüberlängen; hierbei greift das Schneidmesser mit Seitenkanten in Führungsnuten 83 des Anschlußblockes 20 ein. Dieses Schneidmesser weist am unteren Ende eine Abkröpfung 82 auf, mit der es auf einem Fußteil des Anschlußkontaktes sich abstützt.

Es sei hier noch erwähnt, daß unten am Unterteil 22 des Anschlußblockes unter jeder der kanalartigen Vertiefungen 32 eine Gehäuseausnehmung 41 vorgesehen ist. Diese Gehäuseausnehmung dient zur Aufnahme von Kabeladern, die durch die Öse 26 zum Anschlußblock herangeführt werden. Von der Gehäuseausnehmung führt dann die Kabelader zu der der Ausnehmung zugeordneten kanalartigen Vetiefung 32. Hierbei ist die Ausnehmung 41 bereichsweise so verengt, daß die Kabelader dort gehaltert werden kann.

Weiter sei hier noch erwähnt, daß die einzelnen Anschlußkontakte 34 der Stufe 23 versetzt zueinander angeordnet sind (vergl. Fig. 2). Diese Versetzung erfolgt um den notwendigen Sicherheitsabstand einhalten zu können.

Die kanalartige Vertiefung 33 in der Stufe 24 des Anschlußblockes 20 ist etwas breiter als die Vertiefung 32 gestaltet. Sie kann zwei nebeneinanderliegende Adern aufnehmen. In der Vertiefung 33 ist ein Anschlußkontakt 42 vorgesehen. Dieser Kontakt ist als sogenannter Doppelkontakt ausgebildet (vergl. Fig. 4,5 und 6). Der Kontakt 42 weist zwei Kontaktierungsschlitze 37 auf, deren oberes Ende ebenfalls in eine Ausnehmung 36 endet. Hierbei ist der Ausgang der Ausnehmung wiederum durch Nasen 35 im Durchmesser verkleinert worden, so daß die Ausnehmungen wiederum zur Halterung von den anzuschließenden Kabeladern verwendet werden können. Der Doppelkontakt weist in seiner Mitte eine Zunge 43 auf. Diese Zunge bildet an ihrem oberen Ende Teile der Ausnehmung 36 sowie der Nasen 35. Die Zunge ist im unteren Bereich mit einer Ausbuchtung 44 versehen. Diese Ausbuchtung dient als Führung beim Einsetzen in das Gehäuse des Anschlußblockes 20. Wie aus Fig. 5 zu erkennen ist, sind die beiden äußeren Kontaktschenkel 39 wieder in einem Winkel zueinander abgebogen, während die Zunge 43 selber ebenfalls dachförmig getaltet ist und zwar derart, daß die eine Hälfte der Zunge mit den ersten Kontaktschenkeln 39 im Querschnitt dachförmig ausgebildet ist und daß die zweite Hälfte der Zunge mit dem anderen Kontaktschenkel ebenfalls dachförmig gestaltet ist (vergl. Fig. 5). Die dachförmige Gestaltung im Bereich des Kontaktierungsschlitzes ist nun so angeordnet, daß bei angeschlossenem Rangierdraht bei einem Zug an diesem die Verbindung zwischen Leiter und Anschlußkontakt sich verstärkt, da durch die Zugbelastung versucht wird, die dachförmige Gestaltung in eine Ebene unzuwandelen.

Es sei hier noch erwähnt, daß dem Anschlußkontakt 42 in der kanalartigen Vertiefung 33 ebenfalls ein Schneidmesser 40 nachgeordnet ist, das auch in Führungsnuten 83 gehaltert ist. Auch dieses Schneidmesser ist mit einer Abkröpfung 82 versehen, mit der es gegen einen Vorsprung des Anschlußkontaktes 42 anliegt.

Es sei hier noch erwähnt, daß die kanalartigen Vertiefungen in ihrer Mitte einen Vorsprung 45 aufweisen, der derart ausgebildet ist, daß für jeden anzuschließenden Rangierdraht eine muldenartige Vertiefung 46 entsteht.

Wie aus Fig. 2 zu erkennen ist, sind die benachbarten Anschlußkontakte 42 wie die Anschlußkontakte 34 versetzt zueinander angeordnet und zwar entsprechend der Versetzung der Anschlußkontakte 34.

Die Anschlußkontakte 42 setzen sich ebenfalls im Inneren des Gehäuses fort.

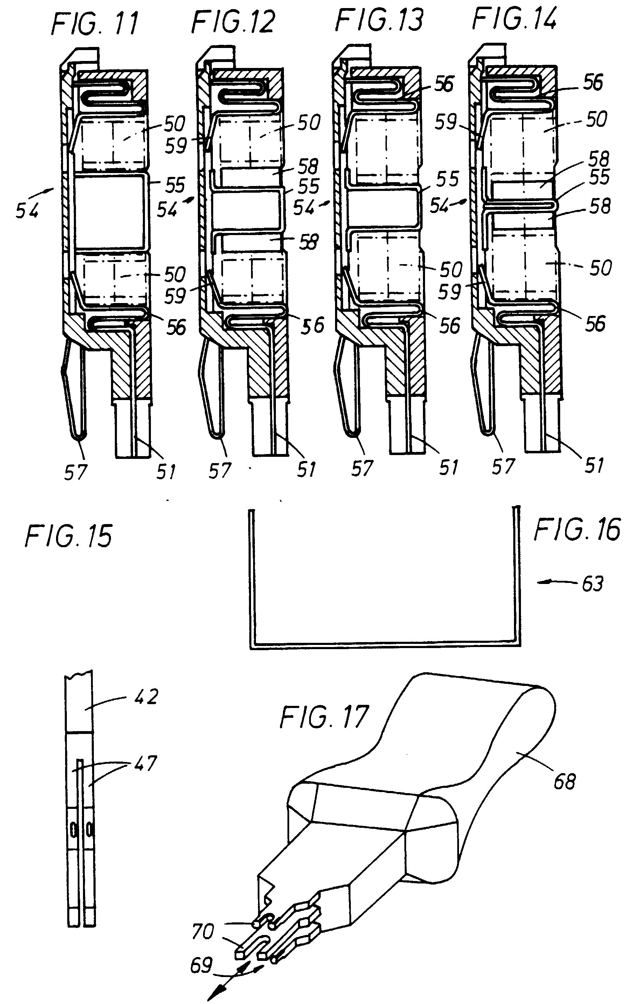

Bei dem Ausführungsbeispiel nach Fig. 9 ist im Inneren des Anschlußblockes der Anschlußkontakt 42 in zwei federnde Zungen 47 unterteilt (vergl. Fig. 15), die federnd an einem federnden Schenkel 48 des Anschlußkontaktes 34 anliegen. Hierbei ist im unteren Bereich des Schenkels 48 des Anschlußkontaktes 34 noch eine Abbiegung 49 vorgesehen, die zur Kontaktierung mit einem Kontakt 51 eines Überspannungsableiters 50 dient. Die federnden Zungen 47 und der federnde Schenkel 48 sind so in dem Gehäuse 21,22 angeordnet, daß sie unter einem Durchbruch 52 liegen. In diesem Durchbruch können Trenn- und Prüfstecker sowie Stromsicherungen eingebaut werden. Mit einem Trennstecker kann die Verbindung zwischen den beiden federnden Kontakten aufgehoben werden, mit einem Prüfstecker kann die Leitung überwacht werden, während die Stromsicherung selber schädliche Überströme begrenzt.

Für letztere Aufgabe der Überstrombegrenzung ist es erforderlich, den Kontakt mit den federnden Schenkel 47, 48 als Schließer-Kontakt anzuordnen. Hierzu wird der dargestellte Öffnerkontakt durch eine Öffnung 77 im Unterteil 22 des Anschlußblokkes 20 unter Verwendung eines nichtdargestellten einschiebbaren Kunststoffteiles getrennt.

Wie schon erwähnt, weist der Anschlußkontakt 34 eine Abbiegung 49 auf. Diese Abbiegung ist an einem Fußteil des Anschlußkontaktes 34 angeformt. Sie berührt den einen Kontakt 51 eines Überspannungsableiters, dessen anderes Ende geerdet ist. Hierbei greift der Kontakt 51 durch eine Öffnung 53 in das Gehäuseinnere des Anschlußblockes und kontaktiert die Abbiegung. Die Überspannungsableiter 50 sind in einem Magazin 54 zusammengefaßt, das in Fig. 11 bis 14 dargestellt ist. Dieses Magazin 54 liegt in der Vertiefung 25 des Anschlußblockes und übergreift bereichsweise die Stufe 23.

Mittig weist das Magazin eine U-förmige Erdungsschiene 55 auf. Diese Erdungsschiene steht in elektrisch leitfähiger Verbindung mit einem federnden Erdungskontakt 57. Hierbei ist an beiden Seiten des Magazins ein Erdungskontakt 57 vorgesehen. Bei den Ausführungsbeispielen nach Fig. 11 bis 14 ist oberhalb und unterhalb der Erdungsschiene 55 ein Überspannungsableier 50 vorgesehen, der durch eine Anschlußfeder 56 federnd gegen die Erdungsschiene 55 gepreßt wird. Die eine Anschlußfeder 56, die am oberen Ende des Magazins 54 angeordnet ist, führt mit einem Anschluß an der Erdungsschiene 55 vorbei zu einem anderen Kontakt 51. Diese Verbindung ist jedoch in den Figuren nicht dargestellt.

Bei einer etwas größeren Gestaltung der Überspannungsableiter 50, wie in Fig. 13 dargestellt, wird die U-förmige Erdungsschiene 55 derart verformt, daß ihre beiden Schenkel dichter zusammenstehen; wiederum ist gewährleistet, daß die Anschlußfeder 56 den Ableiter 50 sicher gegen die Erdungsschiene drückt.

Bei dem Ausführungsbeispiel nach Fig. 12 liegt zwischen Überspannungsableiter und Erdungsschiene eine Schmelzpille 58. Diese Schmelzpille schmilzt durch Erwärmung des Ableiters bei einer Überspannung, die beispielsweise durch einen Blitz hervorgerufen wird, ab. Hierdurch kann die Anschlußfeder 56 den Überspannungsableiter 50 in Richtung auf die Erdungsschiene drücken und zwar so weit, bis schließlich das Ende 59 der Anschlußfeder einen Teil der Erdungsschiene 55 berührt. Die Spannung wird dann unmittelbar über die Anschlußfeder und Erdungsschiene abgeleitet. Zur Unterbringung der Schmelzpille 58 ist der Abstand der beiden Schenkel der U-förmigen Erdungsschiene weiter verkürzt. Ein ähnliches Ausführungsbeispiel ist in Fig. 14 gezeigt. Dort ist die Schmelzpille mit dem Überspannungsableiter so groß, daß die beiden Schenkel der U-förmigen Erdungsschiene zusammengedrückt sind. Beim Schmelzen der Schmelzpille kann wiederum das Ende 59 der Feder 56 gegen die Erdungsschiene 55 gedrückt werden.

Es sei hier noch erwähnt, daß an den beiden äußeren Seitenstirnflächen des Magazins der Überspannungsableiter Rasten vorgesehen sind (nicht dargestellt), die in Schlitze 60 der Anschlußblöcke 20 eingreifen. Hierdurch erfolgt eine Halterung der Magazine am Anschlußblock.

In Fig. 10 ist nur ein Teil einer Kabelabschlußeinheit 61 dargestellt. Das anzuschließende Kabel 62 liegt am einen Ende eines wannenförmigen Trägers 63. Die enzelnen Adern des Kabels 62 werden dann durch eine Öffnung in das Innere des Trägers eingeführt. Der U-förmige Träger 63 weist an seinen Seitenwandungen 64 Schlitze 65 auf, die in einem Querschlitz 66 enden. Hierbei haben die Schlitze 65 und 66 gemeinsam ein etwa T-förmige Aussehen. In den Schlitzen 65 wird nun zur Halterung der Anschlußblöcke 20 der Vorsprung 30 eingeführt und zwar so weit, bis die Rastnasen 31 in den Querschlitz 66 einrasten können. Es sei heir erwähnt, daß die Wandungen des Trägers federnd ausgebildet sind und aus einem elektrischen Strom leitenden Metall bestehen.

Neben den Schlitzen 65 sind jeweils weitere Schlitze 67 vorgesehen. In diese Schlitze 67 greift ein federnder Erdungskontakt 57, der haarnadelförmig gestaltet ist, ein und zwar derart, daß er an beiden Seiten den Schlitz federnd berührt.

Sobald nun der erste Anschlußblock eingesetzt ist, wird eine bestimmte Anzahl von Adern an die Anschlußreihe der unteren Stufe angeschlossen, sobald der erste Anschlußblock bestückt ist, wird dann der zweite Anschlußblock eingesetzt und ebenfalls mit den entsprechenden Kabeladern versehen. Sobald nun die gewünschte Anzahl von Anschlußblöcken 20 eingesetzt ist, können die Anschlußkontakte 42 mit den abgehenden Adern, den sogenannten Rangierleitungen, versehen werden. Vorher kann bereits das Überspannungsableitermagazin eingesetzt werden, ohne daß der Anschluß der einzelnen Rangierleitungen an den Anschlußkontakten 42 behindert wird.

Der in Fig. 10 dargestellte U-förmige Wannenträger kann auch eine solche Gestalt haben, wie es in Fig. 16 dargestellt ist. Wiederum sind an den Seitenwänden dann die erforderlichen Schlitze zur Kontaktierung der Erdung sowie zur Halterung des Anschlußblockes vorgesehen.

Um nun die Anschlüsse leicht bewerkstelligen zu können, ist ein Beschaltungswerkzeug 68 vorgesehen, vergl. Fig. 17. Dieses Beschaltungswerkzeug weist drei plattenartige Abschnitte 70 auf, wobei die Abschnitte mittig eine tunnelartige Ausnehmung 69 aufweisen. Der mittlere Abschnitt 70 überragt die beiden seitlichen Abschnitte. Er ist gegen die Kraft eine Feder (vergl. Pfeil) soweit zurückschiebbar, daß er auf gleicher Höhe wie die anderen Abschnitte liegt. Beim Herstellen eines Aderanschlusses wird das Beschaltungswerkzeug 68 mit seinem hervorstehenden mittleren Abschnitt aufdie Einführungsanschrägungen 85 gesetzt. Es gleitet dann weiter zu den Anschlußkontakten 34, 42. Hierbei greift der Vorsprung 45 der Vertiefung 33 in die Ausnehmung 69. Die Stirnseiten eines außenliegenden und des mittleren plattenartigen Abschnittes 70 drücken die anzuschließende Ader in den Kontaktschlitz 37, wobei vor Erreichen der Endposition der Ader im Schlitz 37 der mittlere und der zweite außenliegende plattenartige Abschnitt die Aderüberlänge über das Schneidmesser 40 drückt und diese Überlänge abschneidet.

Es sei hier noch nachgetragen, daß je nachdem, wie das Beschaltungswerkzeug 68 eingesetzt wird, einer der beiden äußeren Abschnitte 70 die Kabeladern in den Kontaktierungsschlitz 37 eindrückt.

Zum Abschluß sei noch darauf hingewiesen, daß die Anschlußkontakte 34 in Draufsicht auf den Anschlußkontakt gesehen in einer Reihe 71 angeordnet sind, wobei die einzelnen Kontakte, wie schon erwähnt, jeweils versetzt in der Reihe liegen. Parallel zu der Reihe 71 liegen in einer Reihe 72 die Abbiegungen für die Kontaktierung mit den Überspannungsableitern. Parallel zu dieser Reihe liegt dann eine Kontaktreihe 73, die die Kontakte 47, 48 für die Trenn- und Prüfstecker sowie Stomsicherungen umfaßt. Diese Kontakte sind wiederum versetzt angeordnet. Schließlich liegt weiter parallel dazu die Reihe 74 der Anschlußkontakte 42 für die Rangierleitungen. Diese sind, wie schon erwähnt, ebenfalls versetzt angeordnet. Die Versetzung ist insgesamt so, daß die Gestalt der beiden Anschlußkontakte 34 und 42 nicht verändert werden muß. In dem einen Fall liegen die Kontakte etwas näher zu der Vorderseite des Anschlußblockes und im anderen Falle etwas näher an der Rückseite des Anschlußblockes.

Weiter sei noch erwähnt, daß, falls auf die Kontakte für die Trenn- und Prüfstecker verzichtet wird, der gesamte Hohlraum, in dem sich die Anschlußkontakte 34 und 42 befinden, durch eine Füllmasse 76 ausgegossen werden kann, um so Kriechströme od. dgl. zu vermeiden (vergl. Fig. 8). Die beiden Anschlußkontakte sind dann über einen gemeinsamen Schenkel 75 miteinander verbunden.

Es sei hier noch darauf hingewiesen, daß in Fig. 1 die einzelnen Anschlußkontakte in den Vertiefungen nicht dargestellt wurden. In Fig. 18 wurden die kanalartigen Vertiefungen mit den Anschlußkontakten nur bereichsweise dargestellt.

Zu Fig. 18 ist noch zu bemerken, daß, im Gegensatz zu Fig. 2, die in den kanalartigen Vertiefungen 32, 33 liegenden Anschlußkontakte 34, 42 derartig angeordnet sind, daß die durch die Verbiegung der Kontaktschenkel 39 bzw. 43 gebildete Dachspitze von dem Schneidemesser 40 wegweist und zu den ankommenden bzw. den Rangierleitungen hinweist. Es hat sich nämlich gezeigt, daß bei den anzuschließenden aus Kupferwerkstoff hergestellten Leitern ein besserer und sicherer Kontakt als bei einer anderen Anordnung gegeben ist.

Weiter sei darauf hingewiesen, daß der Anschlußblock 20 im Bereich der Ösen 27 eine Bohrung 86 trägt. Diese Bohrung weist eine nicht dargestellte Rippe auf. In die Bohrung wird eine mit einem Längsschlitz 88 versehene Metallhülse 87 eingesetzt, die durch die in den Schlitz eingreifende Rippe in der Bohrung eine genau definierte Lage einnimmt. Die Metallhülse weist an ihrem unteren Ende einen weiteren Schlitz 89 auf, der wie der Schlitz 88 einen den Schlitz verkleinernden Vorsprung 90 trägt, wobei die beiden Schlitze an ihrem unteren Ende dann in eine Verbreiterung 91 übergehen. Mit Hilfe der beiden Schlitze kann die Metallhülse leicht auf die Seitenwandung 64 des Trägers 63 aufgesetzt werden und diese umgreifen und somit eine leitfähige Verbindung zwischen Metallhülse und Träger herstellen. Das obere Ende der Metallhülse dient zur Aufnahme eines Meßstekkers, wie Bananensteckers, der unter Vorspannung in der Hülse gehaltert wird.

In den Fig. 20 - 23 sind zwei Ausführungsbeispiele eines Schneidmessers 40 dargestellt. Das Schneidmesser gemäß den Fig. 20 und 21 ist den Anschlußkontakten 42 nachgeschaltet, an die zwei Kabeladern angeschlossen werden können. Das Messer weist an dem oberen Ende eine Abschrägung 80 auf, durch die eine Schneidkante 81 gebildet ist. Am unteren Ende ist das Messer mit einer Abkröpfung 82 versehen. Diese Abkröpfung zeigt zum einen die Lage der Schneidkante 81 an, zum anderen dient die Abkröpfung zur Abstützung auf Bereichen des Anschlußkontaktes. Es sei hier noch erwähnt, daß an den Seitenkanten des Messers nicht näher bezeichnete Einbuchtungen zu sehen sind, diese dienen zur Montagehilfe sowie zur Halterung des Messers in den Führungsnuten. Das Messer gemäß Fig. 22 und 23 ist für das Abschneiden von Überlängen bestimmt, deren Adern in den Anschlußkontakten 34 festgelegt werden. Es weist einen ähnlichen Aufbau auf, wie das Ausführungsbeispiel nach den Fig. 20 und 21. Es ist jedoch im Bereich der Schneidekante 81 schmaler als das andere Messer gestaltet, da mit diesem Messer lediglich eine Kabelader durchgeschnitten werden soll.

Bei dem in Fig. 19 gezeigten Anschluß der die beiden Kontakte 34 und 42 einstückig miteinander verbindet, ist als Besonderheit anzusehen, daß die Kontaktschenkel 39 an ihren Außenseiten Einprägungen 84 tragen, durch die eine Verlängerung der Aussenseiten erzielbar ist. Hierdurch werden die Kontaktschenkel gegeneinander bewegt, wodurch der Kontakfführungsschlitz 37, sowie der Schlitz 38, in seiner Breite verkleinert wird, und unter Spannung die angeschlossenen Adern haltern kann. Die Einprägungen erlauben auch den Kontakfführungsschlitz breiter - mit einem stabileren Stanzmesser also - herzustellen, wobei, wie erwähnt, durch die Prägung die gewünschte Schlitzbreite einstellbar ist. Darüberhinaus ist die Schlitzbreite derart auf Untermaß verkleinerbar, daß eine zustätzliche Vorspannung gegenüber einer anzuschließenden Ader erhalten wird.

Wie bereits erwähnt, sind die dargestellten Ausführungsformen nur eine beispielsweise Verwirklichung der Erfindung, diese ist nicht darauf beschränkt, vielmehr sind noch mancherlei Änderungen und andere Gestaltungen möglich. Beispielsweise könnte statt eines Überspannungsableitermagazins auch einzelne Überspannungsableiterstekker in die entsprechenden Aufnahmen mit den Abbiegungen eingesetzt werden. Die Ableitungen würden dann über eine Erdungsschiene erfolgen. Wichtig ist, daß auf jeden Fall die Kontaktreihe 74 sowie gegebenenfalls 73 für die Anschlußkontakte der Rangierleitungen bzw. der Prüf- und Trennstekker frei bleibt. Weiter könnten die Rastnasen zur Rastverbindung des Anschlußblockes mit dem wannenförmigen Träger nur an einer Seite des Vorsprunges liegen. Hierdurch würde bei Einsetzen eines weiteren Anschlußblockes der Bereich der Seitenwandung des Trägers, der bereits einen Anschlußblock trägt, nicht ausgeweitet. Schließlich könnten auch die Rastnasen sowie der Vorsprung zur Führung des Anschlußblockes an einer federnden Zunge des Anschlußblockes angeordnet sein. Beim Einsetzen in die Schlitze würde dann die Feder des Anschlußblockes leicht ausweichen, bis die Rastnasen schließlich in den Quersteg eingreifen können. Weiter sei noch erwähnt, daß die Kabelabschlußeinheit auch bei Signal- und Steuerleitungen eingesetzt werden kann.

## Patentansprüche

1. Kabelabschlußeinheit für Fernmelde-, Signal-, Steuerkabel od. dgl., mit einem wannenartigen Träger (63), an dem das Ende eines Kabels (62) sowie die aus dem Kabel (62) heraustretenden Kabeladern anbringbar sind, mit einer Vielzahl quer zur Längsrichtung des Trägers (63) sich erstreckender, auf dem Träger (63) aufsetzbarer, parallelzueinander ausgerichteter Anschlußblöcke (20) mit zwei unterschiedlich hoch gestalteten Stufen (23,24) die mehrere Reihen (71, 72, 73, 74) von Kontakten aufweisen, von denen zwei Reihen (71, 74) in den oberen Enden der Stufen (23, 24)eingelassen sind und abisolierfreie Leiteranschlüße aufweisen, hierbei sind die Kontakte der einen Reihe (71) für ankommende Adern und die Kontakte der anderen Reihe (74) für abgehenden Leitungen, insbesondere Rangierleitungen vorgesehen, und mit wenigstens einer weiteren Kontaktreihe (72, 73) für die Kontaktierungsmöglichkeit von Überspannungsableitern (50), Trenn- und Prüfstecker od. dgl., wobei das Stufenende (23) mit der Kontaktreihe (71) der ankommenden Kabeladern im Querschnitt durch den Anschlußblock (20) gesehen, tiefer angeordnet ist, als das Stufenende (24) mit der Kontaktreihe (74) der abgehenden Leitungen,
**dadurch gekennzeichnet**
daß in den Anschlußblöcken (20) zwischen den unterschiedlich hoch gestalteten Stufenenden (23,24) mit den Kontaktreihen (71, 74) die Kontaktreihe (72) für die Überspannungsableiter vorgesehen ist, und daß die Überspannungsableiter sich zwar in dem Raum oberhalb des Stufenendes (23) mit der niedrigen Reihe (71) der Anschlußkontakte (34) für die ankommenden Kabeladern im Anschlußblock (20) erstrecken, aber das hohe Stufenende mit der Kontaktreihe (74) für die abgehenden Leitungen frei von Überspannungsableitern (50) ist.

2. Kabelabschlußeinheit nach Anspruch 1, dadurch gekennzeichnet, daß eine zwischen den unterschiedlich hoch gestalteten Kontaktreihen (71, 74) vorgesehene Vertiefung (25) die Kontaktreihe (72) für die Überspannungsableiter (50) aufnimmt.

3. Kabelabschlußeinheit nach Anspruch 1 oder 2, dadurch gekennzeichnet, daß die Überspannungsableiter (50) in einem Magazin (54) angeordnet sind, das mit Steckkontakten (51) in den Anschlußblock (20) eingreift.

4. Kabelabschlußeinheit nach einem der Ansprüche 1 bis 3, dadurch gekennzeichnet, daß zwischen den beiden Kontaktreihen (71, 74) für die ankommenden Adern und den abgehenden Leitungen neben der Kontaktreihe (72) für die Überspannungsableiter (50) eine Kontaktreihe (73) für Prüf- und/oder Trennstrecker vorgesehen ist.

5. Kabelabschlußeinheit nach Anspruch 4 dadurch gekennzeichnet, daß die Kontaktreihe (73) für die Prüf-und/ocer Trennstecker frei von dem Magazin (54) der Überspannungsableiter (50) ist.

6. Kabelabschlußeinheit nach einem oder mehreren der Ansprüche 1 bis 5, dadurch gekennzeichnet, daß die einzelnen Anschlußkontakte 40 (42) der Kontaktreihe (74) für die abgehenden Leitungen jeweils als Doppelkontakt ausgebildet sind.

7. Kabelabschlußeinheit nach Anspruch 6, dadurch gekennzeichnet, daß die einzelnen Anschlußkontakte (42) für die abgehenden Leitungen als Doppelkontakte und die Anschlußkontakte (34) für ankommende Kabeladern als Einfachkontakte aufgebaut sind.

8. Kabelabschlußeinheit nach einem der Ansprüche 1 bis 7, dadurch gekennzeichnet, daß den Anschlußkontakten (34, 42) für die ankommenden Kabeladern und/oder für die 55 abgehenden Leitungen Schneidmesser (40) nachgeordnet sind.

9. Kabelabschlußeinheit nach einem der Ansprüche 1 bis 8, dadurch gekennzeichnet, daß die benachbarten Kontakte (34. 42) wenigstens einer der Kontaktreihen (71, 74) jeweils versetzt zueinander angeordnet sind.

10. Kabelabschlußeinheit nach einem der Ansprüche 1 bis 9, dadurch gekennzeichnet. daß die Aufnahme (32, 33) für die abisolierfreien Anschlüsse für die ankommenden Kabeladern und für die abgehenden Leitungen und/oder das Beschaltungswerkzeug (68) zur Herstellung einer Verbindung mit den Anschlußkontakten (34, 42) derart ausgebildet ist daß das Beschaltungswerkzeug (68) in zwei um 180° Grad auseinanderliegenden Drehstellungen zum Anschließen der Adern und der Leitungen funktionsfähig ist.

11. Kabelabschlußeinheit nach einem der Ansprüche 1 bis 10, dadurch gekennzeichnet. daß die beiden einen Kontaktierungsschlitz (37) zwischen sich aufweisenden Kontaktschenkel (39) der einzelnen abisolierfreien Anschlüsse (34, 42) dachförmig gestaltet sind, hierbei ist die den Kontaktierungsschlitz (37) aufweisende Dachspitze in Längsrichtung der anzuschließenden Ader und/oder Leitung ausgerichtet.

12. Kabelabschlußeinheit nach Anspruch 11, dadurch gekennzeichnet, daß bei Ausbildung des abisolierfreien Anschlußkontaktes (42) als Doppelkontakt ein mittlerer Kontaktschenkel (43) selber dachförmig gestaltet ist. hierbei ist die Dachspitze in Längsrichtung der anzuschließenden Leitungen und/oder Adern ausgerichtet.

13. Kabelabschlußeinheit nach Anspruch 12, dadurch gekennzeichnet. daß der mittlere Kontaktschenkel (43) bzw. das Ende des Kontaktes (34) eine Ausbuchtung (44) zur Führung in Konturen der Aufnahme des Anschlußblockes (20) aufweist.

14. Kabelabschlußeinheit nach einem der Ansprüche 1 bis 13, dadurch gekennzeichnet. daß einer der Kontaktschenkel der Kontakte für die Prüf- und/oder Trennstecker durch Schlitzung in zwei Kontaktzungen (47) unterteilt ist.

15. Kabelabschlußeinheit nach einem der Ansprüche 1 bis 14, dadurch gekennzeichnet, daß die im Anschlußblock (20) vorgesehenen Kammern zur Aufnahme der einzelnen Kontakte soweit geschlossen sind, daß sie mit einer Füllmasse (76) ausgießbar sind.

16. Kabelabschlußeinheit nach einem der Ansprüche 1 bis 15, dadurch gekennzeichnet, daß im mittleren Bereich des Überspannungsableitermagazins (54) eine U-förmige Erdungsschiene (55) einsetzbar ist. deren Schenkelabstand zur Aufnahme unterschiedlicher Ableiter (50) veränderlich ist.

17. Kabelabschlußeinheit nach Anspruch 16, dadurch gekennzeichnet, daß die Überspannungsableiter (50) im Magazin (54) federnd gegen die Erdungsschiene (55) gehalten sind, hierbei kontaktiert eine die Erwärmung des Ableiters (50) bei Überspannung begrenzende Schmelzpille (58) den Ableiter (50).

18. Kabelabschlußeinheit nach Anspruch 17, dadurch gekennzeichnet, daß der den Ableiter (50) gegen die Erdungsschiene (55) drückende federnde Kontaktschenkel (56) nach Abschmelzen der Schmelzpille (58) mit dem Ende (59) die Erdungsschiene (55) berührt.

19. Kabelabschlußeinheit nach einem der Ansprüche 1 bis 18, dadurch gekennzeichnet, daß das im Anschlußblock (20) angeordnete Überspannungsableitermagazin (54) mit federnden an der Erdungsschiene vorgesehenen Zungen (57) in Schlitze (67) einer Wandung des wannenförmigen Trägers (63) eingreift.

20. Kabelabschlußeinheit nach einem der Ansprüche 1 bis 19, dadurch gekennzeichnet, daß die 35 Anschlußblöcke (20) in mit einem Querschlitz (66) endenden Schlitzen (65) der Wandungen eines wannenförmigen Trägers (63) geführt und befestigt sind.

21. Kabelabschlußeinheit nach Anspruch 20, dadurch gekennzeichnet, daß die Befestigung des Anschlußblockes (20) in dem wannenförmigen Träger (63) durch eine Rastverbindung (31,66) erfolgt.

22. Kabelabschlußeinheit nach einem der Ansprüche 1 bis 21, dadurch gekennzeichnet, daß in die einzelnen Kontakte (47,48) der Kontaktreihe (73) jeweils ein Kombinationsstecker mit Stromsicherungen einsetzbar ist.

23. Kabelabschlußeinheit nach einem der Ansprüche 1 bis 22, dadurch gekennzeichnet, daß zur Einführung einer Stromsicherung der Kontakt (47,48) zwischen Kabel und Rangierleitungsanschluß unterbrechbar ist.

24. Kabelabschlußeinheit nach Anspruch 23, dadurch gekennzeichnet, daß der Kontakt (47, 48) durch eine Öffnung (77) im Unterteil (22) des Anschlußblockes (20) trennbar ist.

25. Kabelabschlußeinheit nach einem der Ansprüche 1 bis 24, dadurch gekennzeichnet, daß an den Seitenstirnflächen der Anschlußblöcke (20) Ösen (27) vorgesehen sind, die durch mehrere Zwischenstege (78) in mehrere Aufnahmen (79) unterteilt sind.

26. Kabelabschlußeinheit nach einem der Ansprüche 1 bis 25, dadurch gekennzeichnet, daß Kontakte (51) der im Magazin (54) angeordneten Überspannungsableiter (50) mit einer Abbiegung (49) der Anschlußkontakte (34) beim Einsetzen des Magazin (54) in den Anschlußblock (20) in Verbindung treten, hierbei weist das freie Ende der Abbiegung (49) gegen das Magazin (54), wobei die Abbiegungen (49) selber an einem Fußteil der Anschlußkontakte (34) angeformt sind.

27. Kabelabschlußeinheit nach einem der Ansprüche 1 bis 26, dadurch gekennzeichnet, daß die den Anschlußkontakten (34, 42) nachgeordneten Schneidmesser (40) sich unmittelbar auf Schenkel der Anschlußkontakte (34, 42) abstützen.

28. Kabelabschlußeinheit nach einem der Ansprüche 1 bis 27, dadurch gekennzeichnet, daß die Schneidmesser (40) an ihrer oberen Stirnseite mit einer eine Schneidkante (81) bildenden Abschrägung (80) versehen sind, während die untere Stirnseite eine Abkröpfung (82) aufweist, die zur Kennzeichnung der Lage der Schneidkante (81) dient.

29. Kabelabschlußeinheit nach einem der Ansprüche 1 bis 28, dadurch gekennzeichnet, daß die Schneidmesser (40) an ihren beiden Längsseiten in Führungsnuten des Anschlußblockes (20) eingreifen.

30. Kabelabschlußeinheit nach einem der Ansprüche 1 bis 29, dadurch gekennzeichnet, daß im Bereich Ihrer Außenkanten die Kontaktschenkel (39) der Anschlußkontakte 50 (34, 42) beidseitig des Schlitzes (38) und/oder der Kontaktzunge (43) mit Anprägungen (84) versehen siod.

31. Kabelabschlußeinheit nach einem der Ansprüche 1 bis 30, dadurch gekennzeichnet, daß die kanalartigen Vertiefungen (32, 33) für die Anschlußkontakte (34, 42) mit Einführungsanschrägungen versehen sind.

32. Kabelabschlußeinheit nach einem der Ansprüche 1 bis 31, dadurch gekennzeichnet. daß das zum Anschließen der Adern und/oder Leitungen an die Anschlußkontakte (34, 42) dienende Beschaltungswerkzeug (68) drei nebeneinanderliegende plattenartige Abschnitte (70) aufweist. wobei der mittlere Abschnitt (70) gegenüber den beiden außeren Abschnitten hervorsteht und gegen die Kran einer Feder zurückdrückbar ist.

33. Kabelabschlußeinheit nach einem der Ansprüche 1 bis 32, dadurch gekennzeichnet, daß der Anschlußblock (20) im Bereich der Ösen (27) eine Bohrung (86) trägt, in die eine mit einem Längsschlitz (88) versehene Metallhülse (87) einsetzbar ist. die einerseits mit dem metallischen Träger (63) in Verbindung tritt und andererseits zur Halterung eines 20 Meßsteckers. wie Bananenstecker. dient.

34. Kabelabschlußeinheit nach Anspruch 33, dadurch gekennzeichnet. daß die Metallhülse (87) in einem Endbereich einen weiteren Schlitz 25 (89) trägt, hierbei weisen in diesem Endbereich beide Schlitze (88, 89) eine Verbreiterung (91) sowie die Schlitze verkleinernde Vorsprünge (90) auf.

## Claims

1. A cable termination unit for telecommunications cables, signal cables, control cables, or the like, comprising a trough-like carrier (63), on which the end of a cable (62) and the cores extending from the cable (62) can be mounted, comprising a plurality of parallel terminal blocks (20) which extend transversely to the length of the carrier (63) and which can be placed on it, comprising two stages (23, 24) of different height which have a plurality of rows (71, 72, 73, 74) of contacts, two of which (71, 74) are let into the upper ends of the stages (23, 24) and have non-stripped conductor connections, the contacts in one row (71) being provided for incoming cores and those in the other row (74) for outgoing lines, particularly jumper lines, and comprising at least one further row of contacts (72, 73) for the contacting facility for surge protectors (50), break and test plugs, or the like, wherein the stage end (23) with the row of contacts (71) for incoming cable cores is arranged lower than the stage end (24) with the row (74) of contacts for outgoing lines, as seen in cross-section through the terminal block,
characterised in that,
in the terminal blocks (20), the row of contacts (72) for the surge protectors is provided between the stage ends (23, 24) at different levels of the rows of contacts (71, 74), and that the surge protectors actually extend through the space above the stage end (23) of the lower row (71) of terminal contacts (34) for incoming cable cores in the terminal block (20), but the high stage end with the row of contacts (74) is free of surge protectors (50) for the outgoing lines.

2. A cable termination unit according to Claim 1, characterised in that a recess (25) provided between the rows of contacts (71, 74) at different levels receives the row of contacts (72) for the surge protectors (50).

3. A cable termination unit according to Claim 1 or Claim 2, characterised in that the surge protectors (50) are arranged in a magazine (54) which has plug contacts (51) engaging into the terminal block (20).

4. A cable termination unit according to one of Claims 1 to 3, characterised in that a row of contacts (73) for test- and/or break plugs is provided between the two rows of contacts (71, 74) for the incoming cores and outgoing lines, adjacent the row of contacts (72) for the surge protectors (50).

5. A cable termination unit according to Claim 4, characterised in that the row of contacts (73) for the test and/or break plugs is free from the magazine (54) of surge protectors (50).

6. A cable termination unit according to one or more of Claims 1 to 5, characterised in that the individual terminal contacts (42) of the row of contacts (74) for the outgoing lines are each in the form of a double contact.

7. A cable termination unit according to Claim 6, characterised in that the individual terminal contacts (42) for the outgoing lines are in the form of double contacts, and the terminal contacts (34) for incoming cores are constructed as single contacts.

8. A cable termination unit according to one of Claims 1 to 7, characterised in that cutters (40) are arranged behind the terminal contacts (34, 42) for the incoming cores and/or outgoing lines.

9. A cable termination unit according to one of Claims 1 to 8, characterised in that the adjacent contacts (34, 42) in at least one of the rows (71, 74) are each offset from one another.

10. A cable termination unit according to one of Claims 1 to 9, characterised in that the retainer (32, 33) for the non-stripped terminals for the incoming cores and outgoing lines and/or the connecting tool (68) for making a connection with the terminal contacts (34, 42) is designed so that the connecting tool (68) can operate in two rotary positions 180° apart to connect the cores and lines.

11. A cable termination unit according to one of Claims 1 to 10, characterised in that the two contact limbs (39) of the individual non-stripped terminals (34, 42) which have a contacting slit (37) between them, are roof shaped, and that the tip of the roof containing the contacting slit (37) is aligned longitudinally of the core and/or line to be connected.

12. A cable termination unit according to Claim 11, characterised in that in cases where the non-stripped terminal contact (42) is double, a central contact limb (43) is itself roof-shaped, with the tip of the roof aligned longitudinally of the lines and/or cores to be connected.

13. A cable termination unit according to Claim 12, characterised in that the central contact limb (43) or the end of the contact (34) has a protuberance (44) for guiding in profiles of the retainer of the terminal block (20).

14. A cable termination unit according to one of Claims 1 to 13, characterised in that one of the limbs of the contacts for the test and/or break plugs is divided into two contact lugs (47) by slitting it.

15. A cable termination unit according to one of Claims 1 to 14, characterised in that the chambers provided in the terminal block (20) to receive the individual contacts are closed, insofar as they can be plugged with a filling material (76).

16. A cable termination unit according to one of Claims 1 to 15, characterised in that a U-shaped earth bar (55) can be inserted in the central part of the surge protector magazine (54), and that the distance between its limbs can be varied to receive different protectors (50).

17. A cable termination unit according to Claim 16, characterised in that the protectors (50) in the magazine (54) are held resiliently against the earth bar (55), and that a fusing pellet (58) to limit the heating of the protector (50) in the event of a voltage surge is in contact with the protector (50).

18. A cable termination unit according to Claim 17, characterised in that the contact limb (56), which presses the protector (50) resiliently against the earth bar (55), touches the earth bar (55) with its end (59) when the pellet (58) has fused.

19. A cable termination unit according to one of Claims 1 to 18, characterised in that the surge protector magazine (54) arranged in the terminal block (20) has resilient lugs (57), provided on the earth bar, which engage in slots (67) in a wall of the trough-shaped carrier (63).

20. A cable termination unit according to one of Claims 1 to 19, characterised in that the terminal blocks (20) are guided and fixed in slots (65) in the walls of a trough-shaped carrier (63), the slots (65) ending in a transverse slot (66).

21. A cable termination unit according to Claim 20, characterised in that the terminal block (20) is fixed in the trough-shaped carrier (63) with a locking engagement (31, 66).

22. A cable termination unit according to one of Claims 1 to 21, characterised in that a combination plug with fuses can be inserted in each of the individual contacts (47, 48) in the row (73).

23. A cable termination unit according to one of Claims 1 to 22, characterised in that the contact (47, 48) between the cable and the jumper terminal can be broken to insert a fuse.

24. A cable termination unit according to Claim 23, characterised in that the contact (47, 48) can be separated through an opening (77) in the lower part (22) of the terminal block (20).

25. A cable termination unit according to one of Claims 1 to 24, characterised in that eyelets (27) are provided at the lateral end surfaces of the terminal blocks (20) and are divided into a plurality of retainers (79) by a plurality of intermediate webs (78).

26. A cable termination unit according to one of Claims 1 to 25, characterised in that contacts (51) of the surge protectors (50) arranged in the magazine (54) are connected to a bent portion (49) of the terminal contacts (34) when the magazine (54) is inserted in the terminal block (20), that the free end of the bent portion (49) points towards the magazine (54), and that the bent portions (49) themselves are moulded onto a base part of the terminal contacts (34).

27. A cable termination unit according to one of Claims 1 to 26, characterised in that the cutters (40) arranged behind the terminal contacts (34, 42) are supported directly on limbs of the contacts (34, 42).

28. A cable termination unit according to one of Claims 1 to 27, characterised in that the cutters (40) are provided with a bevel (80) which forms a cutting edge (81) at their upper end, while the lower end has an offset portion (82) to identify the position of the cutting edge (81).

29. A cable termination unit according to one of Claims 1 to 28, characterised in that the cutters (40) engage in guiding grooves in the terminal block (20) at their two longitudinal sides.

30. A cable termination unit according to one of Claims 1 to 29, characterised in that the limbs (39) of the terminal contacts (34, 42) are provided with embossed-on portions (84) in the region of their outer edges, on both sides of the slot (38) and/or contact lug (43).

31. A cable termination unit according to one of Claims 1 to 30, characterised in that the channel-like recesses (32, 33) for the terminal contacts (34, 42) are provided with insertion bevels.

32. A cable termination unit according to one of Claims 1 to 31, characterised in that the connecting tool (68) for connecting the cores and/or lines to the terminal contacts (34, 42) has three adjacent plate-like sections (70), and that the central section (70) projects from the two outer ones and can be pushed back against the force of a spring.

33. A cable termination unit according to one of Claims 1 to 32, characterised in that the terminal block (20) contains a hole (86) in the region of the eyelets (27), into which hole a metal sleeve (87) containing a longitudinal slot (88) can be inserted, the sleeve firstly being connected to the metal carrier (63) and secondly being used to hold a measuring plug, such as a banana plug.

34. A cable termination unit according to Claim 33, characterised in that the metal sleeve (87) contains a further slot (89) in an end region, and that in that end region both slots (88, 89) have a widened portion (91) and projections (90) which narrow the slots.

## Revendications

1. Unité de connexion de câbles, pour câbles de communications, signalisation, commande ou analogue, comprenant un support (63) en forme de gouttière, sur lequel peuvent être fixés l'extrémité d'un câble (62), ainsi que les conducteurs sortant de ce câble (62), et de multiples blocs de connexion (20) qui comprennent des parties étagées (23, 24) de hauteur différente et qui s'étendent transversalement à la direction longitudinale du support (63) et peuvent être mis en place sur le support (63) et sont orientés parallèlement entre eux et qui comportent plusieurs rangées (71, 72, 73, 74) de contacts parmi lesquelles deux rangées (71, 74) sont intégrées dans les extrémités supérieures des parties étagées (23, 24) et présentent des connexions de lignes non dénudées, les contacts d'une première rangée (71) étant prévus pour des conducteurs d'arrivée et les contacts de la deuxième rangée (74) pour des lignes de départ, notamment des jarretières de connexion, au moins une rangée supplémentaire de contacts (72, 73) étant prévue pour permettre la connexion de lignes (50) de décharge de surtension, de connecteurs de sectionnement, de contrôle ou d'éléments analogues, tandis que, vue suivant une coupe transversale du bloc de connexion (20), l'extrémité de la partie étagée (23) comprenant la rangée de contacts (71) des conducteurs de câble d'arrivée est disposée plus bas que l'extrémité de la partie étagée (24) comprenant la rangée de contacts (74) des lignes de départ, caractérisée en ce que, dans les blocs de connexion (20), la rangée de contacts (72) prévue pour les lignes de décharge de surtension est disposée entre les extrémités des parties étagées (23, 24) de hauteur différente comprenant les rangées de contacts (71, 74) et en ce que les lignes de décharge de surtension s'étendent, dans le bloc de connexion (20), en effet dans l'espace situé au-dessus de l'extrémité de la partie étagée (23) comprenant la rangée (71) des contacts de connexion (34) pour les conducteurs de câbles arrivant, qui est la plus basse mais que l'extrémité supérieure de la partie étagée comprenant la rangée de contact (74) prévue pour les lignes de départ, est indépendante des lignes de décharge de surtension (50).

2. Unité de connexion de câbles suivant la revendication 1, caractérisée en ce qu'une cavité (25) prévue entre les rangées de contacts (71, 74) de niveaux différents sert à loger la rangée de contacts (72) prévue pour les lignes de décharge de surtension (50).

3. Unité de connexion de câbles suivant la revendication 1 ou 2, caractérisée en ce que les lignes de décharge de surtension (50) sont disposées dans un chargeur (54) qui s'emboîte dans le bloc de connexion (20) par des fiches mâles (51).

4. Unité de connexion de câbles suivant une des revendications 1 à 3, caractérisée en ce qu'entre les deux rangées de contacts (71, 74) prévues pour les conducteurs d'arrivée et pour les lignes de départ, il est prévu, en plus de la rangée de contacts (72) prévue pour les lignes de décharge de surtension (50), une rangée de contacts (73) prévue pour des connecteurs de contrôle et/ou de sectionnement.

5. Unité de connexion de câbles suivant la revendication 4, caractérisée en ce que la rangée de contacts (73) prévue pour les connecteurs de contrôle et/ou de sectionnement est indépendante du chargeur (54) des lignes de décharge de surtension (50).

6. Unité de connexion de câbles suivant une ou plusieurs des revendications 1 à 5, caractérisée en ce que les différents contacts de connexion (42) de la rangée de contacts (74) prévue pour les lignes de départ sont réalisés chacun sous la forme d'un contact double.

7. Unité de connexion de câbles suivant la revendication 6, caractérisée en ce que, les différents contacts de connexion (42) prévus pour les lignes de départ sont réalisés sous la forme de contacts doubles, et les contacts de connexion (34) prévus pour les conducteurs de câble d'arrivée sont réalisés sous la forme de contacts simples.

8. Unité de connexion de câbles suivant une des revendications 1 à 7, caractérisée en ce que des lames-couteaux (40) sont disposées en aval des contacts de connexion (34, 42) prévus pour les conducteurs de câble d'arrivée et/ou pour les lignes de départ.

9. Unité de connexion de câbles suivant une des revendications 1 à 8, caractérisée en ce que les contacts voisins (34, 42) d'au moins l'une des rangées de contacts (71, 74) sont disposés d'une manière décalée deux à deux.

10. Unité de connexion de câbles suivant une des revendications 1 à 9, caractérisée en ce que les logements (32, 33), prévus pour les extrémités non dénudées des conducteurs de câble d'arrivée et des lignes de départ, et/ou pour l'outil de branchement (68), prévu pour la réalisation d'une liaison avec les contacts de connexion (34, 42), sont agencés de telle façon que l'outil de branchement (68) soit susceptible de fonctionner, en vue de la connexion des conducteurs et des lignes, en deux positions se déduisant l'une de l'autre par une rotation de 180°.

11. Unité de connexion de câbles suivant une des revendications 1 à 10, caractérisée en ce que les deux branches de contact (39), délimitant entre elles une fente (37) de réalisation de contact, des différents contacts (34, 42) de connexion sans dénudement sont réalisées en forme de toit, l'arête du toit, qui comporte la fente (37) de réalisation de contact, étant orientée suivant la direction longitudinale du conducteur et/ou de la ligne à connecter.

12. Unité de connexion de câbles suivant la revendication 11, caractérisée en ce que, lorsque le contact (42) de connexion sans dénudement est réalisé sous la forme d'un contact double, une branche centrale de contact (43) est elle-même réalisée en forme de toit, l'arête du toit étant dans ce cas orientée suivant la direction longitudinale des lignes et/ou des conducteurs à connecter.

13. Unité de connexion de câbles suivant la revendication 12, caractérisée en ce que la branche centrale de contact (43) ou l'extrémité du contact (34) comporte une partie repoussée (44) destinée à être guidée dans une partie profilée du logement du bloc de connexion (20).

14. Unité de connexion de câbles suivant une des revendications 1 à 13, caractérisée en ce que l'une des branches des contacts prévus pour les connecteurs de contrôle et/ou de sectionnement est divisée par une fente en deux lames de contact (47).

15. Unité de connexion de câbles suivant une des revendications 1 à 14, caractérisée en ce que les logements prévus dans le bloc de connexion (20) pour recevoir les différents contacts sont suffisamment fermés pour qu'on puisse y couler une masse de remplissage (76).

16. Unité de connexion de câbles suivant une des revendications 1 à 15, caractérisée en ce qu'un profilé de mise à la terre (55) en U, dont l'espacement des ailes est variable de façon à recevoir des lignes de décharge (50) différentes, est conçu pour pouvoir être placé dans la zone centrale du chargeur (54) des lignes de décharge de surtension.

17. Unité de connexion de câbles suivant la revendication 16, caractérisée en ce que les lignes de décharge de surtension (50) sont maintenues élastiquement dans le chargeur (54) en appui sur le profilé de mise à la terre (55), une pastille fusible (58), qui limite l'échauffement de la ligne (50) lors d'une surtension, venant dans ce cas au contact de cette ligne (50).

18. Unité de connexion de câbles suivant la revendication 17, caractérisée en ce que, par son extrémité (59), la branche de contact (56) qui applique élastiquement la ligne de décharge (50) sur le profilé de mise à la terre (55) vient au contact de ce dernier une fois la pastille fusible (58) fondue.

19. Unité de connexion de câbles suivant une des revendications 1 à 18, caractérisée en ce que le chargeur (54) des lignes de décharge de surtension, qui est disposé dans le bloc de connexion (20), vient en prise, par des pattes élastiques (57) prévues sur le profilé de mise à la terre, dans des fentes (67) d'une paroi du support (63) en forme de gouttière.

20. Unité de connexion de câbles suivant l'une des revendications 1 à 19, caractérisée en ce que les blocs de connexion (20) sont guidés et fixés dans des fentes (65), se terminant par une fente transversale (66), des parois du support (63) en forme de gouttière.

21. Unité de connexion de câbles suivant la revendication 20, caractérisée en ce que la fixation du bloc de connexion (20) dans le support (63) en forme de gouttière s'effectue au moyen d'une liaison par enclenchement (31, 66).

22. Unité de connexion de câbles suivant une des revendications 1 à 21, caractérisée en ce qu'un connecteur combiné à fusibles peut chaque fois être monté dans les différents contacts (47, 48) de la rangée supplémentaire de contacts (73).

23. Unité de connexion de câbles suivant une des revendications 1 à 22, caractérisée en ce qu'en vue de l'introduction d'un fusible, la liaison entre les contacts (47, 48) du câble et de la jarretière de connexion est agencée de façon à pouvoir être interrompue.

24. Unité de connexion de câbles suivant la revendication 23, caractérisée en ce que les contacts (47, 48) sont agencés de façon à pouvoir être séparés en utilisant une ouverture (77) ménagée dans la partie inférieure (22) du bloc de connexion (20).

25. Unité de connexion de câbles suivant une des revendications 1 à 24, caractérisée en ce que, sur les faces latérales frontales des blocs de connexion (20), il est prévu des guides (27) qui sont divisés par plusieurs nervures intermédiaires (78) en plusieurs logements (79).

26. Unité de connexion de câbles suivant une des revendications 1 à 25, caractérisée en ce que, lors de la mise en place du chargeur (54) dans le bloc de connexion (20), des contacts (51) des lignes de décharge de surtension (50) disposées dans le chargeur (54) viennent au contact de parties repliées (49) des contacts de connexion (34), l'extrémité libre de chaque partie coudée (49) étant orientée en direction du chargeur (54), tandis que les parties coudées (49) elles-mêmes sont venues d'une pièce sur une partie de base des contacts de connexion (34).

27. Unité de connexion de câbles suivant une des revendications 1 à 26, caractérisée en ce que les lames-couteaux (40) associées aux contacts de connexion (34, 42) prennent directement appui sur des branches de ces derniers.

28. Unité de connexion de câbles suivant une des revendications 1 à 27, caractérisée en ce que, sur leur face frontale supérieure, les lames-couteaux (40) sont pourvues d'un biseau (80) formant une arête de coupe (81), tandis que leur face frontale inférieure comporte une patte reliée (82) qui sert à identifier la position de l'arête de coupe (81).

29. Unité de connexion de câbles suivant une des revendications 1 à 28, caractérisée en ce que, par leurs deux côtés longitudinaux, les lames-couteaux (40) sont emboîtées dans des rainures de guidage du bloc de connexion (20).

30. Unité de connexion de câbles suivant une des revendications 1 à 29, caractérisée en ce que, dans la zone de leurs arêtes extérieures, les branches (39) des contacts de connexion (34, 42), qui sont situées des deux côtés de la fente (38), et/ou de la lame de contact (43), sont pourvues de parties repoussées (84).

31. Unité de connexion de câbles suivant une des revendications 1 à 30, caractérisée en ce que les cavités (32, 33), en forme de conduits, des contacts de connexion (34, 42) sont pourvues de parties inclinées d'introduction.

32. Unité de connexion de câbles suivant une des revendications 1. à 31, caractérisée en ce que l'outil de branchement (68) servant au raccordement des conducteurs et/ou des lignes aux contacts de connexion (34, 42) comprend trois sections (70) en forme de plaque et disposées côte à côte, la section central (70) dépassant des deux autres sections extérieures et étant agencée de façon à pouvoir être repoussée sous l'action d'un ressort.

33. Unité de connexion de câbles suivant une des revendications 1 à 32, caractérisée en ce que, dans la zone des guides (27), le bloc de connexion (20) présente un perçage (86) dans lequel peut être placé un fourreau métallique (87) qui présente une fente longitudinale (88) et qui, d'une part, vient au contact du support métallique (63) et, d'autre part, sert à porter un connecteur de mesure, tel qu'une fiche banane.

34. Unité de connexion de câbles suivant la revendication 33, caractérisée en ce que, dans la zone d'une extrémité, le fourreau métallique (87) présente une autre fente (89), les deux fentes (88, 89) comportant, dans cette zone d'extrémité, une partie élargie (91), ainsi que des saillies (90) réduisant la largeur des fentes.
